# EUROPEAN PATENT APPLICATION

(11) **EP 4 503 207 A1**
(43) Date of publication of application: **05.02.2025**
(21) Application number: 23780163.4
(22) Date of filing: 24.03.2023
(51) Int. Cl.: H01M 4/96, H01M 4/86, H01M 8/00, H01M 8/04, H01M 8/10

(54) **GAS DIFFUSION ELECTRODE, FUEL CELL, AND TRANSPORTATION DEVICE**

(30) Priority: 30.03.2022 JP 2022055773; 21.12.2022 JP 2022204056
(71) Applicant: Toray Industries, Inc., Tokyo 103-8666 (JP)
(72) Inventor: TAKEUCHI, Takashi, Otsu-shi, Shiga 520-8558 (JP); UTSUNOMIYA, Masamichi, Otsu-shi, Shiga 520-8558 (JP); OTAKE, Hiroaki, Otsu-shi, Shiga 520-8558 (JP); WATANABE, Fumitaka, Otsu-shi, Shiga 520-8558 (JP)
(74) Representative: Kador & Partner Part mbB
(86) International application number: PCT/JP2023/011805
(87) International publication number: WO 2023/190153

(57) **Abstract**

The purpose of the present invention is to provide a gas diffusion electrode which reduces electrical resistance in a thickness direction without impairing gas diffusibility, and improves power generation performance when used in a fuel cell. The present invention relates to a gas diffusion electrode having a microporous layer on at least one surface of a conductive porous substrate. The gas diffusion electrode is characterized in that the microporous layer includes carbon black and graphite particles with an aspect ratio of 10 or more, and the ratio of the thickness of a portion in which the microporous layer is sunk of the conductive porous substrate to the thickness of a portion in which the microporous layer is not sunk of the conductive porous substrate is 5-20% inclusive.

## Description

### TECHNICAL FIELD

The present invention relates to a gas diffusion electrode used in a fuel cell, and more particularly to a gas diffusion electrode used in, among fuel cells, a polymer electrolyte fuel cell used as a power source for a fuel cell vehicle and the like.

### BACKGROUND ART

A fuel cell is a mechanism for electrically extracting energy generated when hydrogen is allowed to react with oxygen to produce water, and is expected as clean energy because of its high energy efficiency and the fact that it discharges only water. A polymer electrolyte fuel cell in which a hydrogen-containing fuel gas and oxygen-containing oxidizing gas are supplied to an anode and cathode, respectively, and an electromotive force is generated by bipolar electrochemical reaction is generally constituted by sequentially laminating a bipolar plate, a gas diffusion electrode, a catalyst layer, an electrolyte membrane, a catalyst layer, a gas diffusion electrode, and a bipolar plate. An electrode used in a polymer electrolyte fuel cell is sandwiched between two bipolar plates and disposed therebetween in the polymer electrolyte fuel cell, and has a structure including a polymer electrolyte membrane, catalyst layers formed on both surfaces of the polymer electrolyte membrane, and gas diffusion layers formed outside the catalyst layers. A gas diffusion electrode is distributed as an individual member for forming the gas diffusion layer in the electrode. As the performance required of the gas diffusion electrode, for example, there are gas diffusivity, electrical conductivity for collecting electricity generated in the catalyst layer, and water drainability for efficiently removing moisture generated on the surface of the catalyst layer. To obtain such a gas diffusion electrode, generally, an electrically conductive porous substrate having both gas diffusion ability and electrical conductivity is used.

Examples of the electrically conductive porous substrate specifically include carbon felt, carbon paper, and carbon cloth made of carbon fibers. Among them, carbon paper is most preferable from the viewpoint of mechanical strength and the like.

In addition, the fuel cell is a system in which energy generated at the time when hydrogen and oxygen react with each other to produce water, and therefore when an electrical load increases, i.e., a current to be extracted outside the cell increases, a large amount of water (water vapor) is generated. The water vapor condenses into water droplets at low temperatures to clog pores of the gas diffusion electrode, and thus reduces the amount of gas (oxygen or hydrogen) supplied to the catalyst layer. When all the pores are ultimately clogged, power generation is stopped (this phenomenon is referred to as flooding).

To prevent the occurrence of flooding as much as possible, the gas diffusion electrode is required to have water drainability. Hydrophobicity is normally improved by using a gas diffusion electrode substrate with an electrically conductive porous substrate subjected to a hydrophobic treatment.

However, when an electrically conductive porous substrate subjected to a hydrophobic treatment as described above is used directly as a gas diffusion electrode, condensation of water vapor leads to generation of large water droplets because the substrate has a coarse fiber, and thus flooding easily occurs. Thus, an ink in which electrically conductive fine particles of carbon black, etc. are dispersed may be applied, dried and sintered to provide a microporous layer on an electrically conductive porous substrate subjected to a hydrophobic treatment.

Since such a microporous layer is a member constituting the gas diffusion electrode, it is required that the microporous layer has both gas diffusivity and electrical conductivity in addition to water drainability, similarly to the electrically conductive porous substrate. However, it is known that the gas diffusivity and the electrical conductivity required for the gas diffusion electrode are generally in a trade-off relationship. To overcome this trade-off relationship, many efforts have been made to improve gas diffusivity and electrical conductivity by changing the structure and material in the microporous layer, and to improve cell performance.

Patent Document 1 proposes a gas diffusion electrode for a fuel cell, in which a microporous layer has an impregnating portion that impregnates an electrically conductive porous substrate layer and a non-impregnating portion that does not impregnate the electrically conductive porous substrate layer, the thickness of the non-impregnating portion is 20.0 µm or less, and the thickness of the impregnating portion is 29% or less with respect to the total thickness of the microporous layer.

Patent Document 2 proposes a gas diffusion electrode in which a microporous layer is formed by bonding a microporous layer sheet made of a carbon material containing a binder and at least scaly graphite to a gas diffusion electrode substrate.

### PRIOR ART DOCUMENT

### PATENT DOCUMENTS

Patent Document 1: Japanese Patent Laid-open Publication No. 2021-136056
Patent Document 2: Japanese Patent Laid-open Publication No. 2013-4343

### SUMMARY OF THE INVENTION

### PROBLEMS TO BE SOLVED BY THE INVENTION

However, in the gas diffusion electrode of Patent Document 1, a hydrophobic agent is much added to the microporous layer in order to make the non-impregnating portion fall within the above range, and an electrically conductive path formed by contact between electrically conductive fine particles is inhibited by the hydrophobic agent, so that there is a problem that electrical conductivity is insufficient.

Further, as to the gas diffusion electrode of Patent Document 2, it is described that scaly graphite contributes to improvement of gas permeability in the thickness direction and the plane direction of the microporous layer and reduction of resistance in the plane direction, but since the sheet-like microporous layer is bonded to the gas diffusion substrate, there is a problem that contact resistance between the gas diffusion substrate and the microporous layer sheet worsens electrical conductivity.

Then, an object of the present invention is to provide a gas diffusion electrode that reduces the electrical resistance in the thickness direction without impairing gas diffusivity and improves cell performance when used for a fuel cell.

### SOLUTIONS TO THE PROBLEMS

To solve the above-mentioned problems, the present invention employs the following means.
(1) A gas diffusion electrode comprising a microporous layer on at least one surface of an electrically conductive porous substrate, wherein the microporous layer contains carbon black and graphite particles having an aspect ratio of 10 or more, and a thickness of a portion of the electrically conductive porous substrate where the microporous layer is impregnated is 5% or more and 20% or less of a thickness of a portion of the electrically conductive porous substrate where the microporous layer is not impregnated.
(2) The gas diffusion electrode according to (1), wherein the microporous layer has a density of 0.30 g/cm³ or more and 0.50 g/cm³ or less.
(3) The gas diffusion electrode according to (1) or (2), wherein the surface of the electrically conductive porous substrate on the side proximate to the microporous layer has a fluorine/carbon ratio of 0.20 or more and 0.40 or less.
(4) The gas diffusion electrode according to any one of (1) to (3), wherein the microporous layer contains 0.1% by mass or more and 10% by mass or less of a hydrophobic agent in 100% by mass of the mass of the entire microporous layer.
(5) The gas diffusion electrode according to any one of (1) to (4), wherein the surface of the microporous layer on the side not proximate to the electrically conductive porous substrate has a fluorine/carbon ratio of 0.01 or more and 0.20 or less.
(6) The gas diffusion electrode according to any one of (1) to (5), wherein the surface of the electrically conductive porous substrate on the side not proximate to the microporous layer has a fluorine/carbon ratio of 0.01 or more and 0.15 or less.
(7) The gas diffusion electrode according to any one of (1) to (6), wherein the electrically conductive porous substrate contains 2 parts by mass or more and 10 parts by mass or less of a hydrophobic agent with respect to 100 parts by mass of the mass of the electrically conductive porous substrate.
(8) The gas diffusion electrode according to any one of (1) to (7), wherein the gas diffusion electrode has a gas diffusivity in an in-plane direction of 50 cc/min or more and 150 cc/min or less.
(9) The gas diffusion electrode according to any one of (1) to (8), wherein the graphite particles contained in the microporous layer have an aspect ratio of 50 or more and 5,000 or less.
(10) The gas diffusion electrode according to any one of (1) to (9), wherein the graphite particles contained in the microporous layer have a bulk density of 0.01 g/cm³ or more and 0.20 g/cm³ or less.
(11) The gas diffusion electrode according to any one of (1) to (10), wherein the graphite particles contained in the microporous layer have a crystallite size of 15 nm or more and 100 nm or less.
(12) The gas diffusion electrode according to any one of (1) to (11), wherein where the total mass of the carbon black and the graphite particles contained in the microporous layer is defined as 100% by mass, the mass of the graphite particles is 10% by mass or more and 50% by mass or less.
(13) The gas diffusion electrode according to any one of (1) to (12), wherein the microporous layer has an areal weight of 10 g/m² or more and 30 g/m² or less.
(14) The gas diffusion electrode according to any one of (1) to (13), wherein the surface of the microporous layer on the side not proximate to the electrically conductive porous substrate has a surface roughness Sa of 0.1 µm or more and 7 µm or less.
(15) A fuel cell comprising an electrolyte membrane, a catalyst layer, a bipolar plate, and the gas diffusion electrode according to any one of (1) to (14).
(16) A transportation apparatus including the fuel cell according to (15) as a power supply source.

### EFFECTS OF THE INVENTION

According to the gas diffusion electrode of the present invention, it is possible to obtain a gas diffusion electrode capable of reducing electrical resistance without impairing gas diffusivity, and capable of improving cell performance when used in a fuel cell.

### BRIEF DESCRIPTION OF THE DRAWING

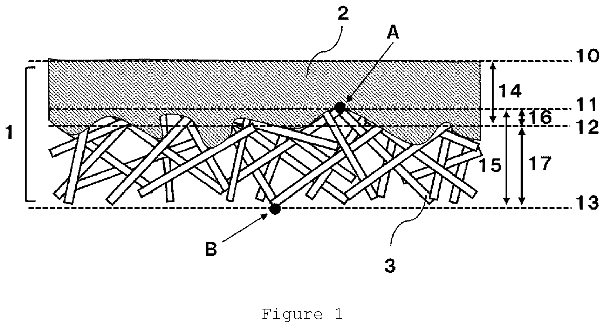

Fig. 1 is a schematic sectional view of a gas diffusion electrode of the present disclosure.

### EMBODIMENTS OF THE INVENTION

The present invention is a gas diffusion electrode comprising a microporous layer on at least one surface of an electrically conductive porous substrate, wherein the microporous layer contains carbon black and graphite particles having an aspect ratio of 10 or more, and a thickness of a portion of the electrically conductive porous substrate where the microporous layer is impregnated is 5% or more and 20% or less of a thickness of a portion of the electrically conductive porous substrate where the microporous layer is not impregnated.

Preferable specific examples of the electrically conductive porous substrate used in the gas diffusion electrode of the present invention include porous substrates containing carbon fibers, such as a carbon fiber woven fabric, a carbon fiber papermaking substrate, a carbon fiber non-woven fabric, carbon felt, carbon paper, and carbon cloth, and metal porous substrates such as a foamed sintered metal, a metal mesh, and an expanded metal. In particular, a porous substrate including a carbon fiber, such as a carbon felt, carbon paper or a carbon cloth, is preferably used because it is excellent in corrosion resistance, and further, a substrate containing a carbonized resin obtained by binding a carbon fiber papermaking substrate with a carbide, i.e. carbon paper, is preferably used because it is excellent in the property of absorbing a change in dimension of an electrolyte membrane in a thickness direction, i.e., "spring property".

In the present invention, a microporous layer is provided on at least one surface of the electrically conductive porous substrate. The microporous layer contains carbon black and graphite particles as electrically conductive substances, and may contain other electrically conductive substances, as necessary. Examples of said other conductive substances include carbon nanotubes, carbon nanofibers, chopped fibers of carbon fiber, and graphene. Owing to the inclusion of both the carbon black and the graphite particles in the microporous layer, the graphite particles effectively bridge the carbon black, so that electrically conductive paths are readily connected, and electrical conductivity in the microporous layer can be improved.

As an electrically conductive substance in the microporous layer, carbon black is used from the viewpoint of low cost and stability of product quality. Examples of the carbon black include furnace black, acetylene black, Ketjen Black, channel black, and lamp black. Of such a variety of carbon black, acetylene black is suitably used from the viewpoint that it contains a slight amount of impurities and hardly lowers the activity of a catalyst. As an index of the content of impurities in carbon black, mention is made of an ash content, and it is preferable to use carbon black having an ash content of 0.1% by mass or less. The lower the ash content in carbon black is, the more preferable it is. Carbon black having an ash content of 0% by mass, that is, carbon black containing no ash is particularly preferable.

The graphite particles can form conductive paths by effectively bridging the carbon black, and can improve the electrical conductivity in the microporous layer. In addition, since the graphite particles are readily oriented in a plane direction in the microporous layer, the graphite particles inhibit the impregnation of the microporous layer into the electrically conductive porous substrate, and contributes to improvement of gas diffusivity in the plane direction.

The graphite particles contained in the microporous layer of the present invention has an aspect ratio of 10 or more. When the aspect ratio of the graphite particles is 10 or more, electrically conductive paths in the microporous layer are effectively formed, so that the electrical conductivity in the microporous layer can be improved, and the impregnation of the microporous layer into the electrically conductive porous substrate can be inhibited, and the gas diffusivity in the plane direction can be improved. The aspect ratio in the present invention can be determined by observing the graphite particles in an enlarged state with a microscope such as a scanning electron microscope or a transmission electron microscope. Where the length in the major axis direction of a graphite particle in the enlarged image is denoted by A and the length in the minor axis direction is denoted by **B,** A/B is measured for arbitrary 100 graphite particles, and the average value thereof is defined as the aspect ratio in the present invention.

The aspect ratio of the graphite particles is preferably 50 or more and 5,000 or less. When the aspect ratio is 50 or more, the number of the graphite particles in the microporous layer can be increased to improve the electrical conductivity in the microporous layer, and the impregnation of the microporous layer into the electrically conductive porous substrate can be inhibited. The aspect ratio is preferably 75 or more, and more preferably 100 or more. When the aspect ratio is 5,000 or less, it is possible to prevent deterioration of gas diffusivity caused by clogging of pores in the microporous layer by the graphite particles. The aspect ratio is preferably 2,500 or less, and more preferably 1,000 or less.

The graphite particles preferably have a flaky shape. When the graphite particles have a flaky shape, the aspect ratio of the graphite particles tends to be large, so that the electrical conductivity in the microporous layer can be improved, and the penetration of the microporous layer into the electrically conductive porous substrate can be inhibited.

Examples of other shapes of the graphite particles include spherical, earthy, and scaly shapes.

The average particle size of the graphite particles is not particularly limited, but is preferably 3 µm or more and 20 µm or less. When the graphite particles have an average particle size of 3 µm or more, the graphite particles are superior in dispersibility and are prevented from aggregating, inhibit decrease in electrically conductive paths, and are further superior in electrical conductivity. In addition, when the average particle size of the graphite particles is 20 µm or less, it is possible to prevent deterioration of gas diffusivity and increase in the surface roughness of the microporous layer caused by clogging of pores in the microporous layer by the graphite particles. The average particle size of the graphite particles means a particle size at an integrated value of 50% in a particle size distribution measured by a laser diffraction scattering particle size distribution measurement method.

The graphite particles preferably have a bulk density of 0.01 g/cm³ or more and 0.20 g/cm³ or less. When the bulk density of the graphite particles is 0.20 g/cm³ or less, or more preferably 0.10 g/cm³ or less, the aspect ratio of the graphite particles tends to be large and the particle size tends to be small, and the microporous layer is further superior in electrical conductivity and gas diffusivity. When the bulk density of the graphite particles is 0.01 g/cm³ or more, or more preferably 0.05 g/cm³ or more, the aspect ratio of the graphite particles tends to be small and the particle size tends to be large, and it is possible to reduce the contact resistance in the microporous layer to further reduce the electrical resistance.

The graphite particles preferably have a crystallite size of 15 nm or more and 100 nm or less. When the crystallite size of the graphite particles is 15 nm or more, or more preferably 18 nm or more, the degree of graphitization of the graphite particles is increased, and the electrical conductivity in the microporous layer can be further enhanced. In addition, when the crystallite size of the graphite particles is 100 nm or less, or more preferably 80 nm or less, the acquisition cost can be kept low.

The mass of an ash contained in the graphite particles is preferably 1% by mass or less from the viewpoint of reducing impurities and making the activity of the catalyst less prone to degradate.

Where the total mass of the carbon black and the graphite particles contained in the microporous layer is 100% by mass, the mass of the graphite particles is preferably 10% by mass or more and 50% by mass or less. When the mass of the graphite particles is 10% by mass or more, or more preferably 15% by mass or more, the electrical conductivity in the microporous layer can be kept higher, and the electrical resistance of the gas diffusion electrode can be kept lower. In addition, the number of graphite particles oriented in the plane direction can be increased, so that the amount of the microporous layer impregnated into the electrically conductive porous substrate can be reduced and the gas diffusivity can be further improved. On the other hand, when the mass of the graphite particles is 50% by mass or less, or more preferably 40% by mass or less, it is possible to inhibit the decrease in viscosity of the ink at the time of forming the microporous layer, reduce the amount of the microporous layer impregnated into the electrically conductive porous substrate, and inhibit the decrease in gas diffusivity.

In addition, since the microporous layer is required to have water drainability, the microporous layer preferably contains a hydrophobic agent in addition to the carbon black and the graphite particles. In particular, a fluorine-based polymer is preferably used as the hydrophobic agent because of its superior corrosion resistance. Examples of the hydrophobic agent contained in the microporous layer include PTFE (polytetrafluoroethylene) (for example, "Teflon (registered trademark)" manufactured by The Chemours Company), FEP (an ethylene tetrafluoride-propylene hexafluoride copolymer), PFA (a perfluoroalkoxy fluoride resin), ETFA (an ethylene-tetrafluoroethylene copolymer), PVDF (polyvinylidene fluoride), and PVF (polyvinyl fluoride). PTFE or FEP is preferable in that their hydrophobicity is particularly high.

The mass of the hydrophobic agent in the microporous layer is preferably 0.1% by mass or more and 10% by mass or less in 100% by mass of the mass of the entire microporous layer. When the mass of the hydrophobic agent in the microporous layer is 0.1% by mass or more, more preferably 1% by mass or more based on the mass of the entire microporous layer, hydrophobicity can be more effectively exhibited. When the mass of the hydrophobic agent in the microporous layer is 10% by mass or less, more preferably 9% by mass or less based on the mass of the entire microporous layer, decrease in the electrical conductivity in the microporous layer can be inhibited. In addition, since the hydrophobic agent has a higher density than carbon black, the density of the microporous layer can be kept at a low level by controlling the mass of the hydrophobic agent in the microporous layer to a certain amount or less. The mass of the hydrophobic agent in the microporous layer based on the mass of the entire microporous layer can be calculated by scraping a surface of the microporous layer of the gas diffusion electrode with a spatula or the like, heating and sintering the obtained powder of the microporous layer at 500°C for about 2 hours in a facility such as an electric furnace to decompose and remove the hydrophobic agent, and dividing the difference in the mass of the microporous layer powder before and after the heating by the mass of the microporous layer powder before the heating.

The microporous layer is preferably formed by applying an ink for forming a microporous layer onto the electrically conductive porous substrate, and then drying and sintering the ink. The ink for forming a microporous layer preferably contains, in addition to carbon black and graphite particles, a solvent and a dispersant for dispersing the carbon black and the graphite. In addition, other substances such as a thickener and a defoamer may be added, as necessary, as long as the dispersion of carbon black and graphite is not impaired.

As the solvent, water is suitably used. As other solvents, for example, a water-soluble organic solvent such as alcohol is used. These solvents may be used singly or two or more of them may be used in combination.

Examples of the dispersant include nonionic surfactants such as polyoxyethylene alkyl ethers, polyoxyethylene alkenyl ethers, polyoxyethylene polyoxypropylene alkyl ethers, polyoxyethylene phenyl ether, polyoxyethylene alkylphenyl ethers, polyoxyethylene polystyrylphenyl ether, polyoxyethylene naphthyl ether, polyoxyethylene alkylamines, polyoxyethylene alkylamides, polyoxyethylene polyoxypropylene glycol, polyoxyethylene fatty acid esters, sorbitan fatty acid esters, polyoxyethylene sorbitan fatty acid esters, and polyoxyethylene glycerol ether, and one or two or more thereof may be used. Among them, polyoxyethylene alkyl ethers, polyoxyethylene polyoxypropylene alkyl ethers, polyoxyethylene alkylphenyl ethers, and polyoxyethylene polystyrylphenyl ether are preferable in that these have good dispersibility for carbon black.

The dispersant preferably has an HLB value of 10 or more and 15 or less. The HLB value is a value indicating a balance between lipophilicity and hydrophilicity in a molecule. When the HLB value of the dispersant is 10 or more, or more preferably 11 or more, affinity with a solvent can be effectively obtained. When the HLB value of the dispersant is 15 or less, or more preferably 14 or less, adsorbability to carbon black can be effectively obtained. The HLB value can be calculated by the following calculation formula. HLB value = (sum of formula weights of hydrophilic moieties)/(molecular weight) × 20

As the thickener, for example, water-soluble polymers such as methyl cellulose, hydroxyethyl cellulose, hydroxypropyl cellulose, carboxymethyl cellulose, polyvinyl alcohol, polyvinyl pyrrolidone, polyethylene glycol, polyacrylic acid, polylactic acid, guar gum, xanthan gum, and starch can be used.

As the defoamer, polyorganosiloxane, phosphoric acid esters, or the like can be used.

As a method for applying the ink for forming the microporous layer to the electrically conductive porous substrate, a method of applying the ink by screen printing, rotary screen printing, spraying, intaglio printing, gravure printing, die coater printing, bar coating, blade coating, knife coating, or the like is preferable.

The areal weight of the microporous layer is preferably within the range of 10 g/m² or more and 30 g/m² or less. When the areal weight of the microporous layer is 10 g/m² or more, the microporous layer can cover the surface of the electrically conductive porous substrate reliably, and the back-diffusion of water produced is promoted, so that the cell performance is improved. In addition, when the areal weight of the microporous layer is 30 g/m² or less, clogging of dents and voids is suppressed, so that water drainability is further improved. The areal weight of the microporous layer is more preferably 26 g/m² or less, and still more preferably 24 g/m² or less. Further, the areal weight of the microporous layer is more preferably 14 g/m² or more, and still more preferably 16 g/m² or more. In addition, the areal weight of the gas diffusion electrode of the present invention having the microporous layer formed is preferably 30 to 90 g/m².

In the gas diffusion electrode of the present invention, a microporous layer is impregnated into the electrically conductive porous substrate on at least one side. In the present invention, the thickness of a portion of the electrically conductive porous substrate where the microporous layer is impregnated is 5% or more and 20% or less of the thickness of a portion of the electrically conductive porous substrate where the microporous layer is not impregnated. Hereinafter, a portion of the electrically conductive porous substrate where the microporous layer is impregnated may be referred to as an impregnated portion, a portion of the electrically conductive porous substrate where the microporous layer is not impregnated may be referred to as a non-impregnated portion, and a ratio of a thickness of a portion of the electrically conductive porous substrate where the microporous layer is impregnated to a thickness of a portion of the electrically conductive porous substrate where the microporous layer is not impregnated may be referred to as a ratio of a thickness of the impregnated portion/a thickness of the non-impregnated portion. When the ratio of the thickness of the impregnated portion/the thickness of the non-impregnated portion is 5% or more, and preferably 10% or more, electrically conductive paths between the electrically conductive porous substrate and the microporous layer are secured, so that electrical conductivity is improved. On the other hand, when the ratio of the thickness of the impregnated portion to the thickness of the non-impregnated portion is 20% or less, and preferably 15% or less, the decrease in the density of the microporous layer can be inhibited, and the decrease in the electrical conductivity in the microporous layer can be inhibited. In addition, it is possible to prevent the microporous layer impregnated into the electrically conductive porous substrate from clogging gas flow channels in the electrically conductive porous substrate, and to inhibit the decrease in gas diffusivity. In order to set the ratio of the thickness of the impregnated portion to the thickness of the non-impregnated portion to 5% or more and 20% or less, it can be controlled by adjusting the fluorine/carbon ratio (F/C ratio) of the surface of the electrically conductive porous substrate on the side proximate to the microporous layer and/or the aspect ratio of the graphite particles in the microporous layer.

The F/C ratio of the surface of the electrically conductive porous substrate on the side proximate to the microporous layer is preferably 0.20 or more and 0.40 or less.

When the F/C ratio of the surface of the electrically conductive porous substrate on the side proximate to the microporous layer is 0.20 or more, or more preferably 0.25 or more, the impregnation into the microporous layer in the electrically conductive porous substrate can be reduced, and the thickness of the impregnated portion/the thickness of the non-impregnated portion can be reduced. In addition, the decrease in the density of the microporous layer can be inhibited, and the decrease in the electrical conductivity in the microporous layer can be inhibited. In addition, it is possible to prevent the microporous layer impregnated into the electrically conductive porous substrate from limiting the gas flow channels in the electrically conductive porous substrate, thereby reducing the diffusibility.

In addition, when the F/C ratio of the surface of the electrically conductive porous substrate on the side proximate to the microporous layer is 0.40 or less, or more preferably 0.35 or less, the microporous layer can be effectively impregnated into the electrically conductive porous substrate, and the thickness of the impregnated portion/the thickness of the non-impregnated portion can be inhibited from becoming excessively small. In addition, since the amount of the hydrophobic agent having low electrical conductivity is reduced, the electrical conductivity of the gas diffusion electrode can be improved.

Here, the F/C ratio of the surface of the electrically conductive porous substrate on the side proximate to the microporous layer is obtained by observing a surface of the electrically conductive porous substrate at a magnification of 2,000 times with a scanning electron microscope, irradiating the surface with an electron beam to detect reflected characteristic X-rays by energy dispersive X-ray spectroscopy (EDX), measuring the fluorine element content and the carbon element content, and calculating the fluorine element content/the carbon element content.

In the present invention, the thickness of the impregnated portion and the thickness of the non-impregnated portion can be determined by the following method (described with reference to Fig. 1 as well). First, the gas diffusion electrode is cut in the thickness direction using an ion milling device or the like, and a section in the thickness direction is observed in a field of view of 320 µm × 420 µm at a magnification of 200 using a scanning electron microscope. In the image obtained by the observation with a scanning electron microscope, the electrically conductive porous substrate and the microporous layer are different in shape and brightness, so that they can be observed separately. Since the microporous layer is impregnated into the electrically conductive porous substrate, the regions of the electrically conductive porous substrate and the microporous layer overlap each other at the portion where the microporous layer is impregnated. Twenty points corresponding to the surface of the microporous layer 2 are taken at equal intervals in the width direction throughout the observation range, and a straight line closest to a line connecting these points is defined as a microporous layer outermost surface 10. A region where the microporous layer is continuous from the microporous layer outermost surface 10 is defined as a region of the impregnated portion, and a region of the electrically conductive porous substrate other than the region of the impregnated portion where the microporous layer is not impregnated is defined as a region of the non-impregnated portion. A straight line parallel to the microporous layer outermost surface 10, the line passing through a point A on the boundary between the region of the impregnated portion and the region of the non-impregnated portion, which is closest to the microporous layer outermost surface 10 in the observation range, is defined as an electrically conductive porous substrate outermost surface 11. At this time, the region of the impregnated portion may include an enclave where the electrically conductive porous substrate is observed, but such an enclave is not regarded as a point on the boundary. Similarly, an enclave where the microporous layer is observed in the region of the non-impregnated portion is not regarded as a point on the boundary. Twenty points on the boundary between the region of the impregnated portion and the region of the non-impregnated portion are taken at equal intervals in the width direction throughout the observation range, and then a straight line parallel to the microporous layer outermost surface 10 away from the microporous layer outermost surface 10 toward the electrically conductive porous substrate side by the average value of the distances between those points and the microporous layer outermost surface 10 is defined as a microporous layer innermost surface 12. A straight line parallel to the microporous layer outermost surface 10, the line passing through a point B on a surface of the electrically conductive porous substrate opposite from the electrically conductive porous substrate outermost surface 11, which is farthest from the microporous layer outermost surface 10 in the observation range, is defined as an electrically conductive porous substrate innermost surface 13. Here, the tip portion of fluffing specifically observed to protrude on the electrically conductive porous substrate is not taken as the point B. Ten or more images are observed, and an average value of distances between the electrically conductive porous substrate outermost surface 11 and the microporous layer innermost surface 12 in the respective images is defined as a thickness 16 of the impregnated portion, and an average value of distances between the microporous layer innermost surface 12 and the electrically conductive porous substrate innermost surface 13 is defined as a thickness 17 of the non-impregnated portion.

The thickness of the electrically conductive porous substrate is preferably 120 µm or more and 200 µm or less. When the thickness of the electrically conductive porous substrate is preferably 120 µm or more, or more preferably 130 µm or more, the in-plane gas diffusivity is readily improved, and the mechanical strength of the gas diffusion electrode can be enhanced. When the thickness of the electrically conductive porous substrate is preferably 200 µm or less, more preferably 160 µm or less, conductive paths are easily connected, and electrical conductivity can be effectively enhanced. The thickness of the electrically conductive porous substrate is determined as an average value of distances 15 between the electrically conductive porous substrate outermost surface 11 and the electrically conductive porous substrate innermost surface 13 in ten or more images obtained by observing a section in the thickness direction of the gas diffusion electrode at a field of view of 320 µm × 420 µm at a magnification of 200 times using a scanning electron microscope (SEM).

The electrically conductive porous substrate preferably has a density of 0.15 g/cm³ or more and 0.50 g/cm³ or less. When the density of the electrically conductive porous substrate is 0.15 g/cm³ or more, the strength of the electrically conductive porous substrate is sufficient, and the durability can be effectively improved. When the density of the electrically conductive porous substrate is 0.50 g/cm³ or less, deterioration of water drainability and gas diffusivity can be prevented.

The microporous layer of the present invention preferably has a density of 0.30 g/cm³ or more and 0.50 g/cm³ or less. The density of the microporous layer can be controlled by adjusting the thickness of the impregnated portion/the thickness of the non-impregnated portion, adjusting the content of the hydrophobic agent in the microporous layer, or the like. The density of the microporous layer of the present invention can be calculated by dividing the mass of the microporous layer by the volume of the microporous layer. The mass of the microporous layer can be calculated by subtracting the mass of the electrically conductive porous substrate subjected to the hydrophobic processing from the mass of the gas diffusion electrode. When the mass of the electrically conductive porous substrate in the gas diffusion electrode is measured, the gas diffusion electrode is heated and sintered at 500°C for about 2 hours to remove the hydrophobic agent, and then compressed air is blown to remove the microporous layer from the gas diffusion electrode, whereby the mass of the electrically conductive porous substrate can be determined. The volume of the microporous layer can be calculated from the area and thickness of the microporous layer, and the thickness 14 of the microporous layer is determined as the average value of the distances between the microporous layer outermost surface 10 and the microporous layer innermost surface 12 in ten or more images obtained by observing a section in the thickness direction of the gas diffusion electrode at a field of view of 320 µm × 420 µm at a magnification of 200 times using SEM.

When the density of the microporous layer is 0.30 g/cm³ or more, or more preferably 0.35 g/cm³ or more, it is possible to prevent insufficient electrical conductivity due to insufficient electrically conductive paths in the microporous layer.

On the other hand, when the density of the microporous layer is preferably 0.50 g/cm³ or less, or more preferably 0.45 g/cm³ or less, clogging of pores in the microporous layer can be inhibited, and the gas diffusivity of the gas diffusion electrode is improved. Further, it is possible to prevent decrease in the mechanical strength of the gas diffusion electrode due to decrease in the spring property of the microporous layer.

The microporous layer of the present invention preferably has a thickness of 120 µm or less. When the thickness of the microporous layer is 120 µm or less, more preferably 100 µm or less, or still more preferably 80 µm or less, the gas diffusion electrode itself is superior in gas or water diffusibility (permeability or water drainability), and electrical resistance can be effectively reduced. In order to cover the roughness of the electrically conductive porous substrate, the thickness of the microporous layer is preferably 20 µm or more.

The surface roughness Sa of the surface of the microporous layer on the side not proximate to the electrically conductive porous substrate is preferably 7 µm or less, and more preferably 5 µm or less. Here, Sa is an arithmetic average height in the reference region, and is calculated in accordance with JIS B 0681-2: 2018. When the surface roughness Sa is 7 µm or less, or more preferably 5 µm or less, a contact area necessary for electric conduction can be secured, and the electrical resistance of the gas diffusion electrode can be effectively reduced. In addition, when used in a fuel cell, adhesion to a catalyst layer is high, and cell performance can be enhanced. In addition, the surface roughness Sa of the surface of the microporous layer is preferably as low as possible, but is preferably 0.1 µm or more from the viewpoint of simplicity of the process of manufacturing the gas diffusion electrode. That is, the surface roughness Sa of the surface of the microporous layer on the side not proximate to the electrically conductive porous substrate is preferably 0.1 to 7 µm.

In addition, the F/C ratio of the surface of the microporous layer on the side not proximate to the electrically conductive porous substrate is preferably 0.20 or less. The F/C ratio of the surface of the microporous layer on the side not proximate to the electrically conductive porous substrate can be controlled by adjusting the mass of the hydrophobic agent in the microporous layer. When the F/C ratio of the surface of the microporous layer on the side not proximate to the electrically conductive porous substrate is preferably 0.20 or less, or more preferably 0.14 or less, the electrical conductivity in the microporous layer can be effectively improved. In order to sufficiently exhibit hydrophobicity, the F/C ratio is preferably 0.01 or more. That is, the F/C ratio of the surface of the microporous layer on the side not proximate to the electrically conductive porous substrate is preferably 0.01 to 0.20.

As the electrically conductive porous substrate to be used for the gas diffusion electrode of the present invention, an electrically conductive porous substrate subjected to a hydrophobic treatment by applying a fluorinated resin is suitably used. Examples of the hydrophobic agent to be applied to the electrically conductive porous substrate, namely, the fluorinated resin to be applied to the electrically conductive porous substrate include PTFE, FEP, PFA, ETFA, PVDF, and PVF, and PTFE or FEP, which exhibits strong hydrophobicity, is preferable.

The mass of the hydrophobic agent in the electrically conductive porous substrate is preferably 2 parts by mass or more and 10 parts by mass or less with respect to 100 parts by mass of the mass of the electrically conductive porous substrate before the hydrophobic processing. When the mass of the hydrophobic agent is 2 parts by mass or more, more preferably 3 parts by mass or more, hydrophobicity can be effectively exhibited. When the mass of the hydrophobic agent is 10 parts by mass or less, more preferably 7 parts by mass or less, it is possible to prevent the hydrophobic agent from clogging pores which serve as gas diffusion paths or water drainage paths and to inhibit the increase in electrical resistance.

The mass of the hydrophobic agent in the electrically conductive porous substrate can be calculated by subtracting the mass of the hydrophobic agent in the microporous layer from the mass of the hydrophobic agent in the gas diffusion electrode. The mass of the hydrophobic agent in the gas diffusion electrode can be calculated from a difference in the mass of the gas diffusion electrode before and after heating when the gas diffusion electrode is heated and sintered to decompose the hydrophobic agent at 500°C for about 2 hours in a facility such as an electric furnace. The mass of the hydrophobic agent in the microporous layer can be calculated from the mass of the microporous layer, and the mass of the hydrophobic agent in the microporous layer with respect to the mass of the entire microporous layer. The mass of the electrically conductive porous substrate can be determined as the mass after removing the hydrophobic agent by heating and sintering the gas diffusion electrode at 500°C for about 2 hours, and then removing the microporous layer from the gas diffusion electrode by blowing compressed air.

As a method for subjecting the electrically conductive porous substrate to a hydrophobic treatment, a method of applying a dispersion containing a hydrophobic agent to the electrically conductive porous substrate is preferable. As a result, the hydrophobic agent can be unevenly distributed in the vicinity of the surface of the electrically conductive porous substrate on the side proximate to the microporous layer, and the F/C ratio of the surface of the electrically conductive porous substrate on the side proximate to the microporous layer can be adjusted to a desired range while the F/C ratio of the surface of the electrically conductive porous substrate on the side not proximate to the microporous layer is kept small with a small mass of the hydrophobic agent, so that the electrical conductivity of the gas diffusion electrode is readily improved. Examples of an application technique for applying the hydrophobic agent to the electrically conductive porous substrate include die coating and spray coating. As another treatment method, a treatment technique of immersing the electrically conductive porous substrate in a dispersion containing a hydrophobic agent, or processing by a dry process such as sputtering of a hydrophobic agent can also be applied. After the hydrophobic treatment, a dry process and further a sintering process may be added, as necessary.

The F/C ratio of the surface of the electrically conductive porous substrate on the side not proximate to the microporous layer is preferably 0.01 or more and 0.15 or less. When the F/C ratio of the surface of the electrically conductive porous substrate on the side not proximate to the microporous layer is 0.15 or less, or more preferably 0.12 or less, decrease in the electrical conductivity of the gas diffusion electrode can be prevented. In addition, when the F/C ratio of the surface of the electrically conductive porous substrate on the side not proximate to the microporous layer is 0.01 or more, hydrophobicity can be sufficiently exhibited.

When the F/C ratio of the surface of the electrically conductive porous substrate on the side not proximate to the microporous layer is adjusted to the above range and the mass of the hydrophobic agent in the electrically conductive porous substrate with respect to the mass of the electrically conductive porous substrate is adjusted to the above range, as a result, the F/C ratio of the surface of the electrically conductive porous substrate on the side proximate to the microporous layer can be adjusted to a preferable range.

The F/C ratio of the surface of the electrically conductive porous substrate on the side not proximate to the microporous layer can be obtained by SEM and EDX, similarly to the measurement of the F/C ratio of the surface of the electrically conductive porous substrate on the side proximate to the microporous layer.

The F/C ratio of the surface of the electrically conductive porous substrate on the side not proximate to the microporous layer can be controlled by adjusting the mass of the hydrophobic agent in the electrically conductive porous substrate.

The electrical resistance in the thickness direction of the electrically conductive porous substrate is preferably 4.0 mΩcm² or more under a 2.0 MPa pressurization. When the electrical resistance in the thickness direction of the electrically conductive porous substrate is 4.0 mΩcm² or more under a 2.0 MPa pressurization, the density of the electrically conductive porous substrate tends to be low, and therefore gas diffusivity tends to be high.

The gas diffusivity in the in-plane direction of the gas diffusion electrode of the present invention is preferably 50 cc/min or more and 150 cc/min or less. When the gas diffusivity in the in-plane direction is preferably 50 cc/min or more, or more preferably 70 cc/min or more, a reaction gas is sufficiently supplied, and the performance of a fuel cell can be effectively improved. When the gas diffusivity in the in-plane direction is preferably 150 cc/min or less, or more preferably 100 cc/min or less, the mechanical strength of the gas diffusion electrode can be increased.

In the present invention, a membrane electrode assembly can be formed by joining the gas diffusion electrode described above to at least one surface of an electrolyte membrane having catalyst layers on both sides. As a result of disposing the microporous layer of the gas diffusion electrode on the catalyst layer side, the back-diffusion of the generated water is facilitated, and the contact area between the catalyst layer and the gas diffusion electrode increases, so that the contact electrical resistance can be reduced, which is preferable.

The fuel cell of the present invention includes the gas diffusion electrode of the present invention. That is, the fuel cell of the present invention is a fuel cell having bipolar plates on both sides of the membrane electrode assembly described above. That is, the fuel cell is constituted by arranging bipolar plates on both sides of the membrane electrode assembly described above. Usually, a fuel cell is constituted by laminating a plurality of such membrane electrode assemblies that are sandwiched by bipolar plates from both sides via a gasket. The catalyst layer is composed of a layer containing an electrolyte and a catalyst support carbon. As the catalyst, platinum is usually used. As the electrolyte, it is preferable to use a perfluorosulfonic acid-based polymer material having high protonic conductivity, oxidation resistance, and heat resistance. The constitutions themselves of the above-mentioned fuel cell unit and fuel cell are well known.

The fuel cell of the present invention can be used as a power supply source for transportation apparatus such as automobiles, ships, and railways.

### EXAMPLES

The present invention will be described below with reference to Examples and Comparative Examples.

### [Measurement methods]

### (1) Electrical resistance of electrically conductive porous substrate

An electrically conductive porous substrate after hydrophobic processing or at a stage compared to the hydrophobic processing was cut into a size of 20 mm × 20 mm, and sandwiched on top and bottom between smooth metal rigid electrodes plated with gold, and an average pressure of 2.0 MPa was applied. In this state, a current of 1 A was applied to the upper and lower electrodes, and the voltage generated between the upper and lower electrodes was measured. In this way, an electrical resistance per unit area was calculated.

### (2) Aspect ratio of graphite particles

Graphite particles were enlarged and observed with SEM, and the value of the length in the major axis direction/the length in the minor axis direction of 100 graphite particles randomly extracted was calculated, and the average value thereof was defined as the aspect ratio of the graphite particles.

### (3) Bulk density of graphite particles

Graphite particles (10 g) were placed in a 1,000 cm³ measuring cylinder, and the volume (cm³) of the graphite particles was measured. The bulk density (g/cm³) of the graphite particles was calculated by the following formula. Bulk density of graphite particles (g/cm3) = 10 (g)/(volume (cm3) of 10 g of graphite particles)

### (4) Crystallite size of graphite particles

The crystallite size of graphite particles was measured by an X-ray diffraction method. In the X-ray diffraction measurement, the half width of the diffraction peak derived from the graphite structure (002) plane was measured, and the crystallite size of the graphite particles was calculated using the Scherrer equation. As a measuring device, an X-ray diffractometer (D8 ADVANCE manufactured by BRUKER) was used.

### (5) Areal weight of solid components of ink for forming microporous layer

The areal weight of the solid components of an ink for forming a microporous layer (the areal weight of a microporous layer) was determined by subtracting the areal weight of an electrically conductive porous substrate subjected to hydrophobic processing from the areal weight of a gas diffusion electrode. The areal weight of the gas diffusion electrode and the areal weight of the electrically conductive porous substrate were determined by cutting them each into a 10 cm square as a test piece, and dividing the mass of the test piece by the area (0.01 m²) of the test piece.

### (6) Thickness of impregnated portion/thickness of non-impregnated portion

A gas diffusion electrode was cut out with an ion milling device (IM4000 manufactured by Hitachi High-Tech Corporation) to produce a through-plane section (a section in the thickness direction), which was then observed with SEM (S-4800 manufactured by Hitachi Ltd.) at an image magnification of 200 times. As to the thickness of the impregnated portion/the thickness of the non-impregnated portion, in ten or more images obtained by observing a section of the gas diffusion electrode in the thickness direction in a visual field of 320 µm × 420 µm at a magnification of 200 times using SEM, an average value of the distances between the electrically conductive porous substrate outermost surface 11 and the microporous layer innermost surface 12 was calculated as the thickness 16 of the impregnated portion, and an average value of the distances between the microporous layer innermost surface 12 and the electrically conductive porous substrate innermost surface 13 was calculated as the thickness 17 of the non-impregnated portion.

### (7) F/C Ratio of electrically conductive porous substrate

The surface of an electrically conductive porous substrate was observed with SEM at a magnification of 2,000 times, and was measured by element distribution analysis. The element distribution analysis was performed using EDX (EX-370 manufactured by HORIBA, Ltd.) by detecting and quantifying characteristic X-rays reflected by an electron beam applied at an accelerating voltage of 20 kV to calculate the fluorine element content and the carbon element content, and calculating the fluorine element content/the carbon element content.

### (8) Density of microporous layer

The density of the microporous layer was calculated by dividing the mass of the microporous layer by the volume of the microporous layer. The volume of the microporous layer can be calculated from the area and thickness of the microporous layer, and the mass of the microporous layer can be calculated by subtracting the mass of the electrically conductive porous substrate subjected to hydrophobic processing from the mass of the gas diffusion electrode. The mass of the electrically conductive porous substrate can be determined by removing the hydrophobic agent by heating and sintering the gas diffusion electrode at 500°C for about 2 hours, and then removing the microporous layer from the gas diffusion electrode by blowing compressed air. The thickness 14 of the microporous layer is determined by an average value of distances between the microporous layer outermost surface 10 and the microporous layer innermost surface 12 in ten or more images obtained by observing a section in the thickness direction of the gas diffusion electrode with a field of view of 320 µm × 420 µm at a magnification of 200 times using SEM.

### (9) F/C Ratio of the surface of the microporous layer on the side not proximate to the electrically conductive porous substrate

The measurement was conducted in the same manner as in the measurement of the F/C ratio of the electrically conductive porous substrate except that the measurement target was changed to the microporous layer outermost surface 10 of the gas diffusion electrode.

### (10) Surface roughness of microporous layer

Using a shape measuring machine (VR-3200 manufactured by KEYENCE CORPORATION), measurement was performed at arbitrary 10 points on the surface of a microporous layer in a field of view of 48 mm² while a gas diffusion electrode was fixed to the device so as to cause neither lifting nor wrinkles with the microporous layer facing up, and the average value at 10 points of the arithmetic mean height Sa calculated in accordance with JIS B 0681-2:2018 was taken as the surface roughness of the microporous layer.

### (11) Gas diffusivity in in-plane direction of gas diffusion electrode

The in-plane gas diffusivity was determined by flowing a nitrogen gas at a pressure of 5 KPa through a through-plane section (a section in the thickness direction) of a gas diffusion electrode and measuring the flow rate (cc/min) of the nitrogen gas. The measurement was performed in a measurement area 8 mm in length and 24 mm in width, and as a measuring device, a gas/water vapor diffusibility measuring device (MVDP-200C manufactured by Seika Corporation) was used.

### (12) Electrical resistance of gas diffusion electrode

The measurement was conducted in the same manner as in the measurement of the electrical resistance of an electrically conductive porous substrate under a 2.0 MPa pressurization except that the measurement target was changed to a gas diffusion electrode having a size of 20 mm × 20 mm.

### [Example 1]

### (Electrically conductive porous substrate)

Polyacrylonitrile-based carbon fiber having a mean diameter of 7 µm ("TORAYCA (registered trademark)" T300 manufactured by Toray Industries, Inc.) was cut into a mean length of 12 mm and dispersed in water, and paper was continuously made by a wet papermaking method.

A 10% by mass aqueous solution of polyvinyl alcohol as a binder was applied onto the papermaking substrate obtained and then dried, and thus a carbon fiber sheet having a carbon fiber areal weight of 15 g/m² was prepared. The adhesion amount of the polyvinyl alcohol was 20 parts by mass with respect to 100 parts by mass of the carbon fiber.

Next, using a phenolic resin obtained by mixing a resol type phenolic resin and a novolak type phenolic resin at a 1:1 mass ratio of the non-volatile content as a thermosetting resin, a scaly graphite powder (average particle diameter 5 µm) as a carbon powder and methanol as a solvent, the materials were mixed at a mass ratio of thermosetting resin (non-volatile content)/carbon powder/solvent being 10/5/85 and uniformly dispersed, affording a resin composition.

Next, the carbon fiber sheet was subjected to a resin impregnation step of continuously immersing the carbon fiber sheet in the resin composition and sandwiching it between rolls to squeeze, and then wound into a roll form, affording a carbon fiber sheet with a precursor. At this time, the rolls were smooth metallic rolls having a structure allowing an excess resin composition to be removed with a doctor blade, and the two rolls were arranged horizontally with a fixed clearance provided therebetween, and the carbon fiber sheet with a precursor was made to pass between the rolls horizontally and then lifted upward vertically, whereby the loading amount of the resin composition of the entire body was adjusted. The loading amount of the phenolic resin in the carbon fiber sheet with a precursor was 130 parts by mass with respect to 100 parts by mass of the carbon fiber.

Hot platens were set in a flat plate press so as to be parallel to each other, a spacer was disposed on the lower hot platen, and the carbon fiber sheet with a precursor was heat-treated at a hot platen temperature of 180°C for 5 minutes. Thereafter, the carbon fiber sheet with a precursor was introduced into a heating furnace filled with a nitrogen gas atmosphere, and fired and carbonized, thereby affording an electrically conductive porous substrate. The electrically conductive porous substrate obtained had a thickness of 140 µm and a density of 0.30 g/cm³ under a 0.15 MPa pressurization.

### (Hydrophobic processing)

The electrically conductive porous substrate described above was subjected to hydrophobic processing by applying a diluted aqueous solution of a PTFE dispersion ("POLYFLON (registered trademark)" D-210C; manufactured by Daikin Industries, Ltd.; containing 60% by mass of PTFE in dispersion medium (water)) thereto with a slit die coater such that the PTFE was applied in an amount of 5.0 parts by mass based on 100.0 parts by mass of the electrically conductive porous substrate before the hydrophobic processing, and then drying at 120°C. The electrically conductive porous substrate subjected to the hydrophobic processing had an electrical resistance of 4.6 mΩcm².

### (Ink for forming microporous layer)

Next, an ink for forming a microporous layer was prepared using acetylene black ("DENKA BLACK (registered trademark)" manufactured by Denka Co., Ltd.) as carbon black, flaky graphite UP-5α (aspect ratio: 193, bulk density: 0.06 g/cm³, crystallite size: 20 nm, manufactured by Nippon Graphite Industries, Co., Ltd.) as graphite particles, PTFE dispersion ("POLYFLON (registered trademark)" D-210C) as a hydrophobic agent, Triton X-100 (manufactured by NACALAI TESQUE, INC.) as a dispersant, and purified water. At this time, the ink was prepared by adjusting the mass ratio of acetylene black/graphite/hydrophobic agent/dispersant/purified water to 5.6 parts by mass/1.4 parts by mass/1.1 parts by mass/14.0 parts by mass/77.9 parts by mass. At this time, the mass of PTFE was 8.6% based on the mass of the entire solid components (acetylene black + graphite + PTFE).

### (Application and drying)

The ink for forming a microporous layer described above was applied onto the electrically conductive porous substrate subjected to the hydrophobic processing with a slit die coater such that the areal weight of the solid components was 20 g/m², and then dried at 120°C.

### (Heat treatment)

Subsequently, a heat treatment was performed at 380°C, affording a gas diffusion electrode.

### [Example 2]

In preparing an ink for forming a microporous layer, scaly graphite JB-5 (aspect ratio: 36, bulk density: 0.08 g/cm³, crystallite size: 23 nm, manufactured by Nippon Graphite Industries, Co., Ltd.) was used as graphite particles. In the same manner as in Example 1 except for the above, a gas diffusion electrode was obtained.

### [Example 3]

At the time of hydrophobic processing, the PTFE dispersion was applied such the amount of PTFE was 8.0 parts by mass with respect to 100.0 parts by mass of the electrically conductive porous substrate. In the same manner as in Example 1 except for the above, a gas diffusion electrode was obtained.

### [Example 4]

At the time of hydrophobic processing, the PTFE dispersion was applied such the amount of PTFE was 12.5 parts by mass with respect to 100.0 parts by mass of the electrically conductive porous substrate. In the same manner as in Example 1 except for the above, a gas diffusion electrode was obtained.

### [Example 5]

At the time of hydrophobic processing, the PTFE dispersion was applied such the amount of PTFE was 2.0 parts by mass with respect to 100.0 parts by mass of the electrically conductive porous substrate. In the same manner as in Example 1 except for the above, a gas diffusion electrode was obtained.

### [Example 6]

In hydrophobic processing, an electrically conductive porous substrate was completely immersed in a diluted aqueous solution of a PTFE dispersion ("POLYFLON (registered trademark)" D-210C; manufactured by Daikin Industries, Ltd.; containing 60% by mass of PTFE in dispersion medium (water)), and then dried at 120°C. The amount of PTFE was 5.0 parts by mass with respect to 100.0 parts by mass of the electrically conductive porous substrate. In the same manner as in Example 1 except for the above, a gas diffusion electrode was obtained.

### [Example 7]

In the preparation of the ink for forming a microporous layer, the mass ratio of acetylene black/graphite/hydrophobic agent/surfactant/purified water was adjusted to 5.6 parts by mass/1.4 parts by mass/2.1 parts by mass/14.0 parts by mass/76.9 parts by mass. In the same manner as in Example 1 except for the above, a gas diffusion electrode was obtained. At this time, the mass of PTFE was 15.0% based on the mass of the entire solid components (acetylene black + graphite + PTFE).

### [Example 8]

In the preparation of the ink for forming a microporous layer, the mass ratio of acetylene black/graphite/hydrophobic agent/surfactant/purified water was adjusted to 5.6 parts by mass/1.4 parts by mass/3.7 parts by mass/14.0 parts by mass/75.3 parts by mass. In the same manner as in Example 1 except for the above, a gas diffusion electrode was obtained. At this time, the mass of PTFE was 24.1% based on the mass of the entire solid components (acetylene black + graphite + PTFE).

### [Example 9]

In the preparation of the ink for forming a microporous layer, the mass ratio of acetylene black/graphite/hydrophobic agent/surfactant/purified water was adjusted to 3.5 parts by mass/3.5 parts by mass/1.1 parts by mass/14.0 parts by mass/77.9 parts by mass. In the same manner as in Example 1 except for the above, a gas diffusion electrode was obtained.

### [Example 10]

In application and drying, an ink for forming a microporous layer was applied onto an electrically conductive porous substrate subjected to hydrophobic processing with a slit die coater such that the areal weight of the solid components was 20 g/m², and then dried at 120°C. Then, the ink was again applied to the top of the formed microporous layer with a slit die coater such that the areal weight was 20 g/m², and dried at 120°C. In the same manner as in Example 1 except for the above, a gas diffusion electrode was obtained.

### [Example 11]

In preparing an ink for forming a microporous layer, flaky graphite BSP-5AK (aspect ratio: 57, bulk density: 0.05 g/cm³, crystallite size: 16 nm, manufactured by Chuetsu Graphite Works Co., Ltd.) was used as graphite particles. In the same manner as in Example 1 except for the above, a gas diffusion electrode was obtained.

### [Example 12]

When an ink for forming a microporous layer was prepared, scaly graphite CB-150 (aspect ratio: 26, bulk density: 0.26 g/cm³, crystallite size: 21 nm, manufactured by Nippon Graphite Industries, Co., Ltd.) was used as graphite particles. In the same manner as in Example 1 except for the above, a gas diffusion electrode was obtained.

### [Example 13]

In preparing an ink for forming a microporous layer, scaly graphite PCE-7 (aspect ratio: 21, bulk density: 0.12 g/cm³, crystallite size: 14 nm, manufactured by Chuetsu Graphite Works Co., Ltd.) was used as graphite particles. In the same manner as in Example 1 except for the above, a gas diffusion electrode was obtained.

### [Comparative Example 1]

In the preparation of the ink for forming a microporous layer, the mass ratio of acetylene black/graphite/hydrophobic agent/surfactant/purified water was adjusted to 7.0 parts by mass/0 parts by mass/1.1 parts by mass/14.0 parts by mass/77.9 parts by mass. In the same manner as in Example 1 except for the above, a gas diffusion electrode was obtained.

### [Comparative Example 2]

As the graphite particles of an ink for forming a microporous layer, spherical graphite CGB-6R (aspect ratio: 6.5, bulk density: 0.26 g/cm³, crystallite size: 31 nm, manufactured by Nippon Graphite Industries, Co., Ltd.) was used. In the same manner as in Example 1 except for the above, a gas diffusion electrode was obtained.

### [Comparative Example 3]

A diluted aqueous solution of a PTFE dispersion was not applied to an electrically conductive porous substrate. In the same manner as in Example 1 except for the above, a gas diffusion electrode was obtained.

### [Comparative Example 4]

In the preparation of the ink for forming a microporous layer, the mass ratio of acetylene black/graphite/hydrophobic agent/surfactant/purified water was adjusted to 1.4 parts by mass/5.6 parts by mass/1.1 parts by mass/14.0 parts by mass/77.9 parts by mass. In the same manner as in Example 1 except for the above, a gas diffusion electrode was obtained.

### [Comparative Example 5]

In the preparation of the ink for forming a microporous layer, the mass ratio of acetylene black/graphite/hydrophobic agent/surfactant/purified water was adjusted to 2.8 parts by mass/0.7 parts by mass/0.6 parts by mass (0.55 parts by mass)/7.0 parts by mass/88.9 parts by mass. In the same manner as in Example 1 except for the above, a gas diffusion electrode was obtained.

### [Comparative Example 6]

### (Electrically conductive porous substrate)

An electrically conductive porous substrate that was the same as that prepared in Example 1 was used.

### (Hydrophobic processing)

The electrically conductive porous substrate was subjected to hydrophobic processing in the same manner as in Example 1.

### (Ink for forming microporous layer)

An ink for forming a microporous layer was prepared in the same manner as in Example 1 except that the mass ratio of acetylene black/graphite/hydrophobic agent/surfactant/purified water was adjusted to 5.6 parts by mass/1.4 parts by mass/6.3 parts by mass/14.0 parts by mass/72.7 parts by mass. At this time, the mass of PTFE was 35.0% based on the mass of the entire solid components (acetylene black + graphite + PTFE).

### (Microporous layer film)

The ink for forming a microporous layer was applied onto a "Kapton (registered trademark)" film (manufactured by DU PONT-TORAY CO., LTD.) with a slit die coater so as to have an areal weight of 20 g/m², then dried at 120°C, subjected to a heat treatment at 380°C, and peeled off from the Kapton film, affording a microporous layer film.

### (Lamination and joining)

The microporous layer film was laminated on an electrically conductive porous substrate subjected to hydrophobic processing in the same manner as in Example 1, and joined with a roll press (pressure: 2.0 MPa, temperature: 100°C, rotation speed: 50 mm/s), affording a gas diffusion electrode.

### [Example 14]

### (Electrically conductive porous substrate)

An electrically conductive porous substrate was obtained in the same manner as in Example 1 except that the areal weight of carbon fibers in the carbon fiber sheet was changed to 21 g/m². The resulting electrically conductive porous substrate had, at 0.15 MPa, a thickness of 190 µm and a density of 0.30 g/cm³.

### (Hydrophobic processing)

The electrically conductive porous substrate was subjected to hydrophobic processing in the same manner as in Example 1 such that PTFE was in an amount of 5.0 parts by mass with respect to 100.0 parts by mass of the electrically conductive porous substrate. The electrically conductive porous substrate subjected to the hydrophobic processing had an electrical resistance of 5.3 mΩcm².

### (Ink for forming microporous layer)

An ink for forming a microporous layer that was the same as that used in Example 1 was used.

### (Application and drying)

The ink for forming a microporous layer described above was applied onto the electrically conductive porous substrate subjected to the hydrophobic processing with a slit die coater such that the areal weight of the solid components was 20 g/m², and then dried at 120°C.

### (Heat treatment)

Subsequently, a heat treatment was performed at 380°C, affording a gas diffusion electrode.

### [Comparative Example 7]

In the preparation of the ink for forming a microporous layer, the mass ratio of acetylene black/graphite/hydrophobic agent/surfactant/purified water was adjusted to 7.0 parts by mass/0 parts by mass/1.1 parts by mass/14.0 parts by mass/77.9 parts by mass. In the same manner as in Example 14 except for the above, a gas diffusion electrode was obtained.

The physical properties and evaluation results of the gas diffusion electrodes of Examples and Comparative Examples are shown in Tables 1 to 4.

**[Table 1]**

| | | Unit | Example 1 | Example 2 | Example 3 | Example 4 | Example 5 | Example 6 |
|---|---|---|---|---|---|---|---|---|
| Hydrophobic processing | Mass of hydrophobic agent with respect to electrically conductive porous substrate | % | 5.0 | 5.0 | 8.0 | 12.5 | 2.0 | 5.0 |
| | Electrical resistance of electrically conductive porous substrate after hydrophobic processing | mΩcm² | 4.6 | 4.6 | 5.1 | 5.3 | 4.4 | 4.8 |
| Ink for forming microporous layer | Shape of graphite | | Flaky | Scaly | Flaky | Flaky | Flaky | Flaky |
| | Aspect ratio of graphite | | 193 | 36 | 193 | 193 | 193 | 193 |
| | Bulk density of graphite | g/cm³ | 0.06 | 0.08 | 0.06 | 0.06 | 0.06 | 0.06 |
| | Crystallite size of graphite | nm | 20 | 23 | 20 | 20 | 20 | 20 |
| | Acetylene black : graphite (mass ratio) | | 80:20 | 80:20 | 80:20 | 80:20 | 80:20 | 80:20 |
| | Mass of hydrophobic agent in solid components of ink for forming microporous layer | % | 8.6 | 8.6 | 8.6 | 8.6 | 8.6 | 8.6 |
| Gas diffusion electrode | Areal weight of solid components of ink for forming microporous layer | g/m² | 20 | 20 | 20 | 20 | 20 | 20 |
| | Thickness of impregnated portion/thickness of non-impregnated portion | % | 14 | 16 | 10 | 8 | 19 | 15 |
| | F/C ratio of surface of electrically conductive porous substrate proximate to microporous layer | | 0.27 | 0.27 | 0.36 | 0.43 | 0.21 | 0.26 |
| | F/C ratio of surface of electrically conductive porous substrate not proximate to microporous layer | | 0.11 | 0.11 | 0.14 | 0.15 | 0.08 | 0.24 |
| | Density of microporous layer | g/cm³ | 0.38 | 0.40 | 0.41 | 0.44 | 0.33 | 0.37 |
| | F/C ratio of surface of microporous layer not proximate to electrically conductive porous substrate | | 0.10 | 0.10 | 0.10 | 0.10 | 0.10 | 0.10 |
| | Surface roughness of microporous layer | µm | 4.1 | 4.4 | 4.1 | 4.3 | 4.1 | 5.1 |
| Electrode performance | In-plane gas diffusivity | cc/min | 71 | 69 | 75 | 77 | 66 | 70 |
| | Electrical resistance | mΩcm² | 6.7 | 7.0 | 7.2 | 7.5 | 7.0 | 7.7 |

**[Table 2]**

| | | Unit | Example 7 | Example 8 | Example 9 | Example 10 | Example 11 | Example 12 |
|---|---|---|---|---|---|---|---|---|
| Hydrophobic processing | Mass of hydrophobic agent with respect to electrically conductive porous substrate | % | 5.0 | 5.0 | 5.0 | 5.0 | 5.0 | 5.0 |
| | Electrical resistance of electrically conductive porous substrate after hydrophobic processing | mΩcm² | 4.6 | 4.6 | 4.6 | 4.6 | 4.6 | 4.6 |
| Ink for forming microporous layer | Shape of graphite | | Flaky | Flaky | Flaky | Flaky | Flaky | Scaly |
| | Aspect ratio of graphite | | 193 | 193 | 193 | 193 | 57 | 26 |
| | Bulk density of graphite | g/cm³ | 0.06 | 0.06 | 0.06 | 0.06 | 0.05 | 0.26 |
| | Crystallite size of graphite | nm | 20 | 20 | 20 | 20 | 16 | 21 |
| | Acetylene black : graphite (mass ratio) | | 80:20 | 80:20 | 50:50 | 80:20 | 80:20 | 80:20 |
| | Mass of hydrophobic agent in solid components of ink for forming microporous layer | % | 15.0 | 24.1 | 8.6 | 8.6 | 8.6 | 8.6 |
| Gas diffusion electrode | Areal weight of solid components of ink for forming microporous layer | g/m² | 20 | 20 | 20 | 40 | 20 | 20 |
| | Thickness of impregnated portion/thickness of non-impregnated portion | % | 14 | 10 | 20 | 15 | 16 | 17 |
| | F/C ratio of surface of electrically conductive porous substrate proximate to microporous layer | | 0.27 | 0.27 | 0.27 | 0.27 | 0.27 | 0.27 |
| | F/C ratio of surface of electrically conductive porous substrate not proximate to microporous layer | | 0.11 | 0.11 | 0.11 | 0.11 | 0.11 | 0.11 |
| | Density of microporous layer | g/cm³ | 0.44 | 0.53 | 0.32 | 0.38 | 0.30 | 0.40 |
| | F/C ratio of surface of microporous layer not proximate to electrically conductive porous substrate | | 0.23 | 0.27 | 0.15 | 0.10 | 0.10 | 0.15 |
| | Surface roughness of microporous layer | µm | 5.2 | 5.3 | 4.6 | 4.0 | 4.3 | 5.8 |
| Electrode performance | In-plane gas diffusivity | cc/min | 73 | 75 | 65 | 70 | 67 | 68 |
| | Electrical resistance | mΩcm² | 7.4 | 7.9 | 6.2 | 7.6 | 7.2 | 7.3 |

**[Table 3]**

| | | Unit | Example 13 | Comparative Example 1 | Comparative Example 2 | Comparative Example 3 | Comparative Example 4 | Comparative Example 5 |
|---|---|---|---|---|---|---|---|---|
| Hydrophobic processing | Mass of hydrophobic agent with respect to electrically conductive porous substrate | % | 5.0 | 5.0 | 5.0 | 0.0 | 5.0 | 5.0 |
| | Electrical resistance of electrically conductive porous substrate after hydrophobic processing | mΩcm² | 4.6 | 4.6 | 4.6 | 4.2 | 4.6 | 4.6 |
| Ink for forming microporous layer | Shape of graphite | | Scaly | - | Spherical | Flaky | Flaky | Flaky |
| | Aspect ratio of graphite | | 21 | - | 6.5 | 193 | 193 | 193 |
| | Bulk density of graphite | g/cm³ | 0.12 | - | 0.26 | 0.06 | 0.06 | 0.06 |
| | Crystallite size of graphite | nm | 14 | - | 31 | 20 | 20 | 20 |
| | Acetylene black : graphite (mass ratio) | | 80:20 | - | 80:20 | 80:20 | 20:80 | 80:20 |
| | Mass of hydrophobic agent in solid components of ink for forming microporous layer | % | 8.6 | 8.6 | 8.6 | 8.6 | 8.6 | 8.6 |
| Gas diffusion electrode | Areal weight of solid components of ink for forming microporous layer | g/m² | 20 | 20 | 20 | 20 | 20 | 20 |
| | Thickness of impregnated portion/thickness of non-impregnated portion | % | 18 | 25 | 51 | 78 | 55 | 84 |
| | F/C ratio of surface of electrically conductive porous substrate proximate to microporous layer | | 0.27 | 0.27 | 0.27 | 0 | 0.27 | 0.27 |
| | F/C ratio of surface of electrically conductive porous substrate not proximate to microporous layer | | 0.11 | 0.11 | 0.11 | 0 | 0.11 | 0.11 |
| | Density of microporous layer | g/cm³ | 0.36 | 0.21 | 0.25 | 0.20 | 0.27 | 0.22 |
| | F/C ratio of surface of microporous layer not proximate to electrically conductive porous substrate | | 0.15 | 0.09 | 0.14 | 0.10 | 0.16 | 0.16 |
| | Surface roughness of microporous layer | µm | 4.9 | 5.3 | 3.9 | 4.1 | 5.6 | 7.2 |
| Electrode performance | In-plane gas diffusivity | cc/min | 67 | 64 | 42 | 29 | 45 | 21 |
| | Electrical resistance | mΩcm² | 7.0 | 8.4 | 8.1 | 9.2 | 6.0 | 6.6 |

**[Table 4]**

| | | Unit | Comparative Example 6 | Example 14 | Comparative Example 7 |
|---|---|---|---|---|---|
| Hydrophobic processing | Mass of hydrophobic agent with respect to electrically conductive porous substrate | % | 5.0 | 5.0 | 5.0 |
| | Electrical resistance of electrically conductive porous substrate after hydrophobic processing | mΩcm² | 4.6 | 5.3 | 5.3 |
| Ink for forming microporous layer | Shape of graphite | | Flaky | Flaky | - |
| | Aspect ratio of graphite | | 193 | 193 | - |
| | Bulk density of graphite | g/cm³ | 0.06 | 0.06 | - |
| | Crystallite size of graphite | nm | 20 | 20 | - |
| | Acetylene black : graphite (mass ratio) | | 80:20 | 80:20 | - |
| | Mass of hydrophobic agent in solid components of ink for forming microporous layer | % | 35.0 | 8.6 | 8.6 |
| Gas diffusion electrode | Areal weight of solid components of ink for forming microporous layer | g/m² | 20 | 20 | 20 |
| | Thickness of impregnated portion/thickness of non-impregnated portion | % | 0 | 14 | 24 |
| | F/C ratio of surface of electrically conductive porous substrate proximate to microporous layer | | 0.27 | 0.21 | 0.21 |
| | F/C ratio of surface of electrically conductive porous substrate not proximate to microporous layer | | 0.11 | 0.09 | 0.09 |
| | Density of microporous layer | g/cm³ | 0.25 | 0.40 | 0.25 |
| | F/C ratio of surface of microporous layer not proximate to electrically conductive porous substrate | | 0.40 | 0.11 | 0.11 |
| | Surface roughness of microporous layer | µm | 8.3 | 4.2 | 4.3 |
| Electrode performance | In-plane gas diffusivity | cc/min | 87 | 109 | 97 |
| | Electrical resistance | mΩcm² | 14.1 | 7.6 | 9.0 |

### INDUSTRIAL APPLICABILITY

The gas diffusion electrode of the present invention is suitably used as an electrode of a fuel cell. The gas diffusion electrode of the present invention is suitably used as an electrode of a polymer electrolyte type fuel cell to be used as a power source for transportation apparatus such as a fuel cell vehicle or a fuel cell aircraft especially among fuel cells.

### DESCRIPTION OF REFERENCE SIGNS

1: Gas diffusion electrode
2: Microporous layer
3: Carbon fiber
10: Microporous layer outermost surface
11: Electrically conductive porous substrate outermost surface
12: Microporous layer innermost surface
13: Electrically conductive porous substrate innermost surface
14: Thickness of microporous layer
15: Thickness of electrically conductive porous substrate
16: Thickness of impregnated portion
17: Thickness of non-impregnated portion
A: Point closest to microporous layer outermost surface 10 on boundary between impregnated portion and non-impregnated portion
B: Point farthest from microporous layer outermost surface and located on surface of electrically conductive porous substrate opposite from electrically conductive porous substrate outermost surface

## Claims

1. A gas diffusion electrode comprising a microporous layer on at least one surface of an electrically conductive porous substrate, wherein the microporous layer contains carbon black and graphite particles having an aspect ratio of 10 or more, and a thickness of a portion of the electrically conductive porous substrate where the microporous layer is impregnated is 5% or more and 20% or less of a thickness of a portion of the electrically conductive porous substrate where the microporous layer is not impregnated.

2. The gas diffusion electrode according to claim 1, wherein the microporous layer has a density of 0.30 g/cm³ or more and 0.50 g/cm³ or less.

3. The gas diffusion electrode according to claim 1 or 2, wherein a surface of the electrically conductive porous substrate on a side proximate to the microporous layer has a fluorine/carbon ratio of 0.20 or more and 0.40 or less.

4. The gas diffusion electrode according to claim 1 or 2, wherein the microporous layer contains 0.1% by mass or more and 10% by mass or less of a hydrophobic agent in 100% by mass of a mass of an entire microporous layer.

5. The gas diffusion electrode according to claim 1 or 2, wherein a surface of the microporous layer on a side not proximate to the electrically conductive porous substrate has a fluorine/carbon ratio of 0.01 or more and 0.20 or less.

6. The gas diffusion electrode according to claim 1 or 2, wherein a surface of the electrically conductive porous substrate on a side not proximate to the microporous layer has a fluorine/carbon ratio of 0.01 or more and 0.15 or less.

7. The gas diffusion electrode according to claim 1 or 2, wherein the electrically conductive porous substrate contains 2 parts by mass or more and 10 parts by mass or less of a hydrophobic agent based on 100 parts by mass of a mass of the electrically conductive porous substrate.

8. The gas diffusion electrode according to claim 1 or 2, wherein the gas diffusion electrode has a gas diffusivity in an in-plane direction of 50 cc/min or more and 150 cc/min or less.

9. The gas diffusion electrode according to claim 1 or 2, wherein the graphite particles contained in the microporous layer have an aspect ratio of 50 or more and 5,000 or less.

10. The gas diffusion electrode according to claim 1 or 2, wherein the graphite particles contained in the microporous layer has a bulk density of 0.01 g/cm³ or more and 0.20 g/cm³ or less.

11. The gas diffusion electrode according to claim 1 or 2, wherein the graphite particles contained in the microporous layer have a crystallite size of 15 nm or more and 100 nm or less.

12. The gas diffusion electrode according to claim 1 or 2, wherein where a total mass of the carbon black and the graphite particles contained in the microporous layer is defined as 100% by mass, a mass of the graphite particles is 10% by mass or more and 50% by mass or less.

13. The gas diffusion electrode according to claim 1 or 2, wherein the microporous layer has an areal weight of 10 g/m² or more and 30 g/m² or less.

14. The gas diffusion electrode according to claim 1 or 2, wherein a surface of the microporous layer on a side not proximate to the electrically conductive porous substrate has a surface roughness Sa of 0.1 µm or more and 7 µm or less.

15. A fuel cell comprising an electrolyte membrane, a catalyst layer, a bipolar plate, and the gas diffusion electrode according to claim 1 or 2.

16. A transportation apparatus using the fuel cell according to claim 15 as a power supply source.
